Europäisches Patentamt

**European Patent Office**

Office européen des brevets

(19)

(11)  **EP 1 108 871 B1**

(12)  **EUROPEAN PATENT SPECIFICATION**

(45) Date of publication and mention
of the grant of the patent:
**10.08.2005  Bulletin 2005/32**

(51) Int Cl.[7]: **F02D 19/08**, F02D 41/24,
F02D 41/00, F02D 41/14

(21) Application number: **00127586.6**

(22) Date of filing: **15.12.2000**

(54) **A method for estimating the stoichiometric ratio for a control system of an internal combustion engine**

Verfahren zur Abschätzung des stöchiometrischen Verhältnisses eines Steuersystems für eine Brennkraftmaschine

Méthode d'estimation du rapport stochimetrique pour système de commande de moteur à combustion interne

(84) Designated Contracting States:
**DE ES FR GB SE**

(30) Priority: **17.12.1999  IT  BO990690**

(43) Date of publication of application:
**20.06.2001  Bulletin 2001/25**

(73) Proprietor: **Magneti Marelli Powertrain S.p.A.
20011 Corbetta (IT)**

(72) Inventors:
• **Poggio, Luca
15047 Spinetta Marengo (IT)**
• **Ceccarini, Daniele
47900 Rimini (IT)**
• **Gelmetti, Andrea
40131 Bologna (IT)**

(74) Representative: **Franzolin, Luigi et al
STUDIO TORTA S.r.l.,
Via Viotti, 9
10121 Torino (IT)**

(56) References cited:
**US-A- 4 751 907        US-A- 5 094 208
US-A- 5 195 497        US-A- 5 469 831
US-A- 5 970 968        US-A- 6 016 796**

**Description**

The present invention relates to a method for estimating the stoichiometric air-fuel ratio for a control system of an internal combustion engine.

As is known, the internal combustion engines currently available, in particular those with controlled ignition, may use different types of fuel, for instance petrol or alcohol, each of which requires a particular calibration of specific parameters. In particular, the stoichiometric value of the air-fuel ratio or, more simply, the stoichiometric ratio, which is needed for the purposes of correct control of the operation of the engine, varies substantially from case to case. The stoichiometric ratio is, for instance, 14.56 for petrol, while it is approximately 9 for alcohol.

It is obviously possible to carry out a single calibration before the engine is marketed, but this imposes the constraint that only the type of fuel for which the calibration has been carried out can be used. This is a drawback as, while in many countries it is possible to find only one type of fuel, which will presumably therefore be the only fuel to be used during the vehicle's life, both petrol and alcohol are distributed in other countries. It may well be, therefore, that both types of fuel are present in the tank supplying the engine. Moreover, it is commonly the case that a tank partially full of one type of fuel is filled up with fuel of a different type. The engine is therefore supplied with a mixture of fuels, whose composition is not known in advance and has a stoichiometric ratio of between 9 and 14.56.

The problem of enabling the use, for each individual engine, of different fuels at successive times is therefore raised.

A known solution consists in providing the control system with an appropriate sensor making it possible to carry out measurements of the conductivity or of the dielectric constant of the fuel, on the basis of which it is possible to determine the type of fuel being used or, possibly, the composition of the mixture supplied to the engine.

This solution has, however, some drawbacks.

The use of an additional sensor firstly entails an increase in the engine production costs. Moreover, an increase in the number of components of the control system means that a system is more readily subject to malfunctions due to breakdown or wear of components and, over time, reliability may be compromised.

An example of a known control method is provided in US-A-5 094 208, which discloses an internal combustion engine capable of operating on petrol and/or methanol and including an adaptive control system which is based on a lambda feedback loop. The control system estimates the actual proportion of methanol in the fuel and the lambda feedback loop is adapted accordingly.

The object of the present invention is to provide a fuel recognition method which is free from the above-mentioned drawbacks and, in particular, does not entail the addition of components to the control system.

The present invention therefore relates to a method for estimating the stoichiometric air-fuel ratio for a control system of an internal combustion engine as claimed in claim 1.

The invention is described in further detail below with reference to a preferred embodiment, in which:

Fig. 1 is a simplified block diagram of a control system of an internal combustion engine implementing the method of the present invention;
Fig. 2 is a graph relating to the lambda-value-voltage characteristic of an oxygen sensor contained in the control system of Fig. 1;
Fig. 3 is a flow diagram relating to the present method;
Fig. 4 is a simplified block diagram of a control system of an internal combustion engine implementing a variant of the present method;
Fig. 5 is a graph relating to the lambda-value-voltage characteristic of an oxygen sensor contained in the control system of Fig. 4; and
Fig. 6 is a flow diagram relating to the variant of the present method.

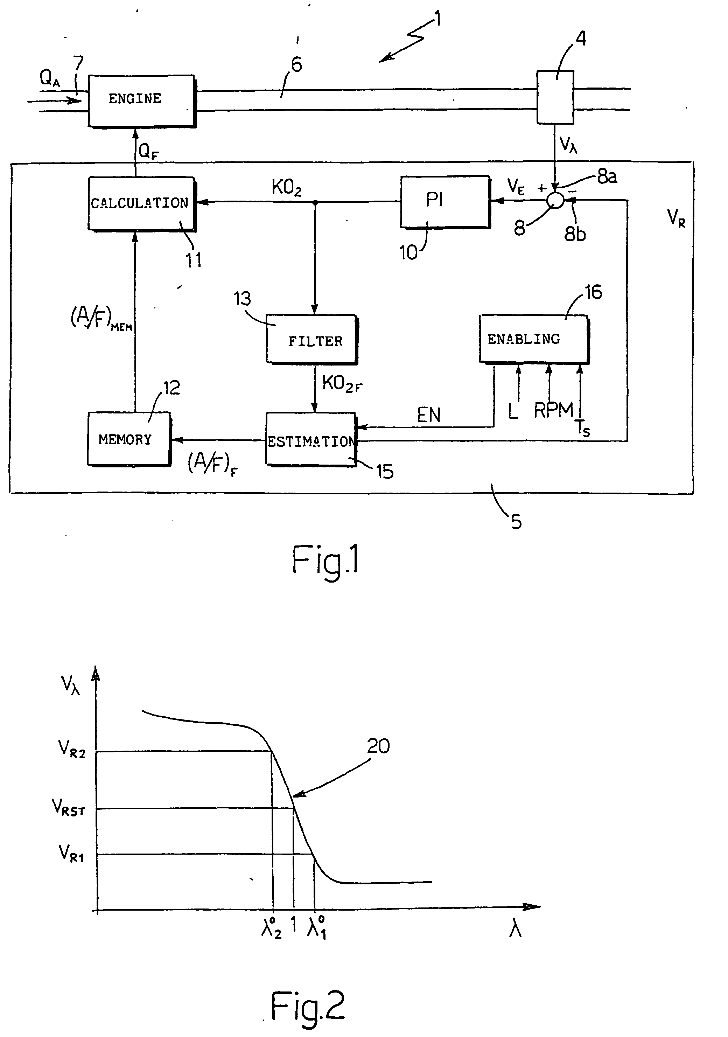

In Fig. 1, a control system 1 of an internal combustion engine 2 comprises an oxygen sensor 4 and a control unit 5. The oxygen sensor 4, for instance a LAMBDA probe of ON/OFF type, having the lambda-value-voltage characteristic shown in Fig. 2, is disposed along an exhaust duct 6 of the engine 2, immediately behind the latter. In operation, the oxygen sensor 4 is submerged in the exhaust gases produced by the combustion of a mixture formed by a mass of air $Q_A$, supplied to the engine 2 via an intake manifold 7, and a quantity of fuel $Q_F$. Moreover, the oxygen sensor 4 supplies the control unit 5 with a composition signal $V_\lambda$, representative of the lambda value $\lambda$, i.e. of the quantity of oxygen in the exhaust gases, and having at least a first composition value indicative of lambda values lower than 1 (rich mixture) and a second composition value indicative of lambda values greater than 1 (thin mixture). The composition signal $V_\lambda$ is preferably a voltage signal.

In the control unit 5, the composition signal $V_\lambda$ is supplied to a summing input 8a of a summing node 8, which further receives, at a subtracting input 8b, a reference signal $V_R$ (in particular a reference voltage) representative of an objective lambda $\lambda^0$. An error signal $V_E$, supplied as output from the summing node 8, is supplied to a controller 10, for instance a controller of proportional-integral operation, of type PI, which generates a control parameter $KO_2$.

A calculation block 11, receiving the control parameter $KO_2$ from the controller 10 and a stored stoichiometric ratio $(A/F)_{MEM}$ supplied by a memory 12, determines and supplies to the engine 2 the quantity of fuel $Q_F$ which has to be injected into each cylinder.

The control parameter $KO_2$ is further supplied as input to a filter 12 which generates a filtered control parameter $KO_{2F}$ and supplies it to an estimation block 15. As described in detail below, the estimation block 15, which also receives as input an enabling signal EN, of logic type and supplied by an enabling block 16, estimates a real stoichiometric ratio $(A/F)_F$ of the fuel supplied to the engine 2 which is stored in the memory 12. The estimation block is, moreover, connected to the subtracting input 8b of the summing node 8 to which it supplies desired values of the reference signal $V_R$, as will be explained below.

The enabling block 16 receives as input a plurality of parameters, including for instance the number of revolutions RPM and the load L of the engine 2 and the temperature $T_s$ of the oxygen sensor 4, as a function of which it determines the values of the enabling signal EN.

In operation, the calculation block 11 uses the control parameter $KO_2$ and the stored stoichiometric ratio $(A/F)_{MEM}$ in order to determine the quantity of fuel $Q_F$ to be injected into the cylinders, according to the equation:

$$Q_F = \frac{Q_A}{(A/F)_{MEM} \, \lambda^0 \, KO_2} \qquad (1)$$

in which the objective lambda $\lambda^0$ is set for instance to 1. In stable operating conditions, in which the number of revolutions RPM and the load L are substantially constant, the control parameter $KO_2$ oscillates about a unit value and the ratio given by the equation:

$$Q_A/Q_F = (A/F)_{MEM} \, \lambda^0 \, KO_2 \qquad (2)$$

represents the real stoichiometric ratio $(A/F)_F$ of the fuel.

If fuel having a stoichiometric ratio differing from the stored stoichiometric ratio $(A/F)_{MEM}$ is introduced into the tank, the value of the quantity of fuel $Q_F$ supplied according to the equation (1) does not make it possible initially to obtain a lambda value (equal to the objective lambda $\lambda^0$) on ignition of the engine 2. Consequently, the control parameter $KO_2$ supplied by the controller 10 is polarised, i.e. it begins to oscillate about a mean value other than unity, and corrects the quantity of fuel $Q_F$ injected into the cylinders such that the lambda value is close to the objective lambda $\lambda^0$. Moreover, the control parameter $KO_2$ also assumes a mean value different from unity if the objective lambda $\lambda^0$ is set to a value other than 1. The filter 13 generates the filtered control parameter $KO_{2F}$ as a function of the control parameter $KO_2$ in order to attenuate its variations (for instance, the filtered control parameter $KO_{2F}$ may be equal to the mean value of the control parameter $KO_2$). The estimation block 15 detects the trend of the filtered control parameter $KO_{2F}$ indicative of the mean value of the control parameter $KO_2$, and calculates the real stoichiometric ratio (A/F) on the basis of this trend.

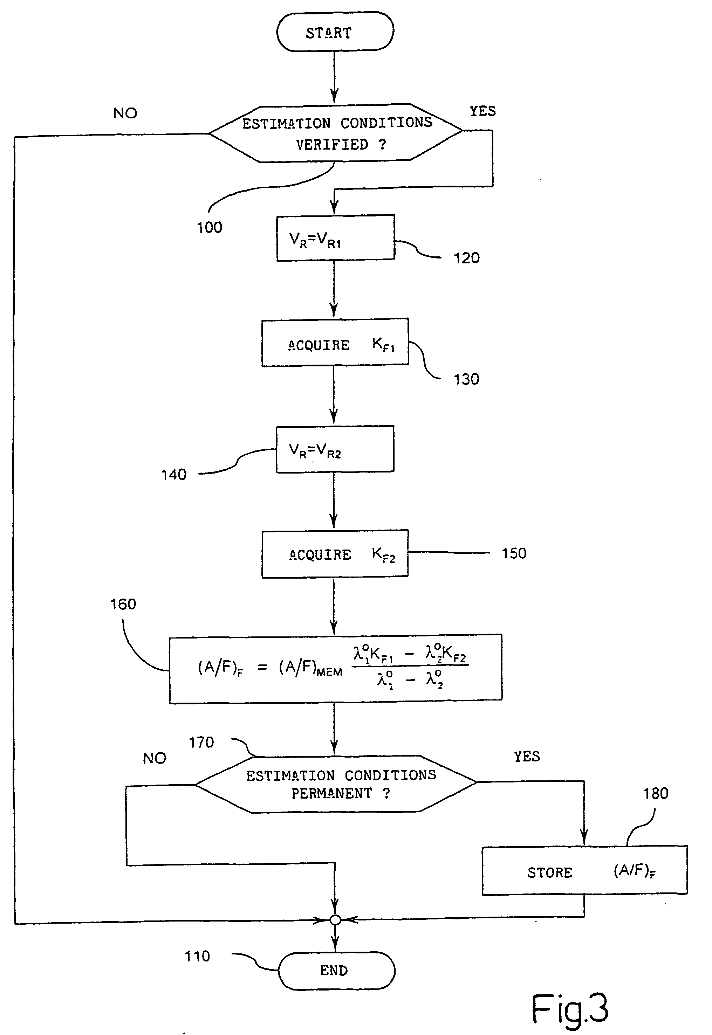

In Fig. 3, the enabling block 16 checks whether the conditions for carrying out a procedure to estimate the stoichiometric ratio have occurred (block 100). It is in particular checked whether the operating conditions of the engine 2 are stationary, i.e. if the number of revolutions RPM and the load L have remained substantially constant for a first predetermined time interval and, moreover, if the temperature $T_s$ of the oxygen sensor 4 is within a predetermined range of operational temperature values. If the estimation conditions have not occurred (output NO from the block 100), the estimation procedure is terminated (block 110), otherwise (output YES from the block 100) the estimation block 15 sets the reference signal $V_R$ to a first reference value $V_{R1}$, equal for instance to 300 mV (block 120). As shown in Fig. 2, this makes it possible to impose a first objective value lambda $\lambda^0{}_1$ (equal for instance to 1.005) on the objective lambda $\lambda^0$; when, however, the reference signal $V_R$ assumes a stoichiometric reference value $V_{RST}$ (equal to 450 mV), the objective lambda $\lambda^0$ is unitary.

After a second predetermined time interval, in which the control parameter $KO_2$ assumes a mean value such as to bring the objective lambda $\lambda^0$ around the first objective lambda value $\lambda^0{}_1$, a first filtered value $K_{F1}$ of the filtered control parameter $KO_{2F}$, indicative of the mean value of the control parameter $KO_2$, is acquired (block 130).

Subsequently, the estimation block 15 imposes a second reference value $V_{R2}$, equal for instance to 700 mV (Fig. 2), on the reference signal $V_R$ such that the objective lambda $\lambda^0$ is set to a second objective lambda value $\lambda^0{}_2$, for instance 0.995 (block 140, Fig. 3); then, after a time equivalent to the second predetermined time interval, a second filtered value $K_{F2}$ of the filtered control parameter $KO_{2F}$ is acquired (block 150).

The real stoichiometric ratio $(A/F)_F$ is then calculated (block 160) according to the equation:

$$(A/F)_F = (A/F)_{MEM} \frac{\lambda_1^0 K_{F1} - \lambda_2^0 K_{F2}}{\lambda_1^0 - \lambda_2^0} \qquad (3)$$

It is then checked whether the estimation conditions (constant number of revolutions RPM and load L and temperature $T_s$ of the sensor 4 within the range of operating values), has been maintained during the performance of the estimation procedure: if so (output YES from block 160), the real stoichiometric ratio $(A/F)_F$ is recorded in the memory 12 as the new stored stoichiometric ratio $(A/F)_{MEM}$ (block 180) and, if not, the procedure is directly terminated (block 110).

In this way, if the estimation procedure is brought correctly to a conclusion in stable engine conditions 2, the value of the stored stoichiometric ratio $(A/F)_{MEM}$ supplied by the memory 12 coincides with the real stoichiometric ratio $(A/F)_F$ as estimated.

It will be appreciated that equation (3) derives from a comparison between two different operating points of the engine 2, defined by the first and respectively by the second objective lambda values $\lambda_1^0$ and $\lambda_2^0$. These values are conveniently selected from within a transition section 20 of the lambda-value-voltage characteristic of the oxygen sensor 4 (Fig. 2); this makes use of the fact that the transition section 20, although having a very accentuated gradient, is not vertical, however, with the result that there is a bi-univocal correspondence between points of the axis of the lambda-values and points of the axis of the voltages.

The comparison between two different operating points makes it possible to eliminate the effects of any drifts due to production dispersions or wear of components (for instance partial closures of the injectors which supply the cylinders of the engine 2), as a result of which the control parameter $KO_2$ oscillates about values other than 1 even if the objective titre is unitary.

In particular, in the first operating point, in which the objective lambda $\lambda^0$ is set to the first objective lambda value $\lambda_1^0$, this gives:

$$(Q_A/Q_F)_1 = (A/F)_{MEM} \lambda_1^0 K_{F1} \qquad (4)$$

where $(Q_A/Q_F)_1$ is a first mean air/fuel ratio. Equation (4) is obtained from equation (1) by substituting the first filtered value $K_{F1}$ for the control parameter $KO_2$. Moreover, the following equation is obtained from the determination of the titre:

$$(Q_A/Q_F)_1 = \lambda_1^0 (A/F)_F \qquad (5)$$

Consequently, combining equations (4) and (5) gives the equation:

$$\lambda_1^0 (A/F)_F = (A/F)_{MEM} \lambda_1^0 K_{F1} \qquad (6)$$

valid in the first operating point of the engine 2.

Analogously, in the second operating point, in which the objective lambda $\lambda^0$ is set to the first objective lambda value $\lambda_2^0$, the following equations are valid:

$$(Q_A/Q_F)_2 = (A/F)_{MEM} \lambda_2^0 K_{F2} \qquad (7)$$

in which $(Q_A/Q_F)_2$ is a second mean air/fuel ratio (equation (7) is obtained from equation (1) by substituting the second filtered value $K_{F2}$ for the control parameter $KO_2$) :

4

$$\left(Q_A / Q_F\right)_2 = \lambda_2^0 \left(A / F\right)_F \qquad (8)$$

obtained from the determination of lambda $\lambda$, and

$$\lambda_2^0 \left(A / F\right)_F = \left(A / F\right)_{MEM} \lambda_2^0 K_{F2} \qquad (9)$$

obtained by combining equations (7) and (8).

Subtracting equations (6) and (9) member by member gives the relationship:

$$\left(A / F\right)_F \left(\lambda_1^0 - \lambda_2^0\right) = \left(A / F\right)_{MEM} \left(\lambda_1^0 K_{F1} - \lambda_2^0 K_{F2}\right) \qquad (10)$$

from which equation (3) can be directly obtained.

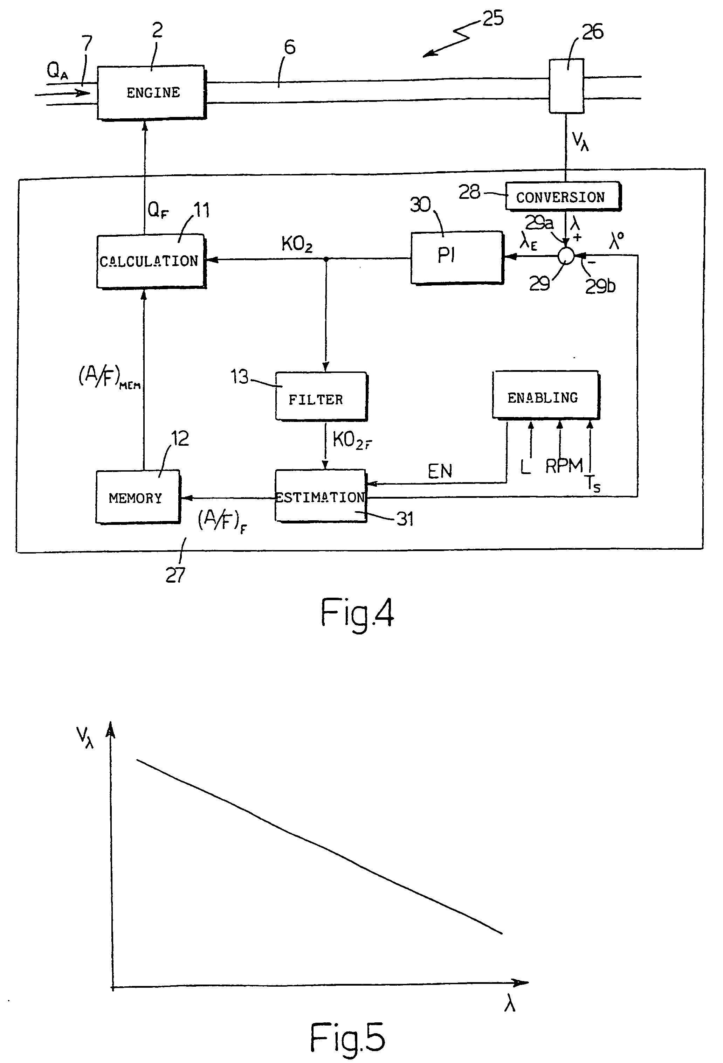

A variant of the present method will be described below with reference to Figs. 4 and 5, in which parts identical to those already illustrated in Figs. 2 and 3 bear the same reference numerals.

In particular, Fig. 4 shows a control system 25 of the engine 2 comprising a linear oxygen sensor 26 and a control unit 27.

The linear oxygen sensor 26, for instance a linear or UEGO probe, disposed along the exhaust duct 6 of the engine 2, supplies a composition signal $V_\lambda$ substantially proportional to the lambda-value $\lambda$, i.e. to the quantity of oxygen present in the exhaust gases, to the control unit 27.

In the control unit 27, the composition signal $V_\lambda$ is supplied to a conversion block 28 which, on the basis of a lambda-value-voltage characteristic of the linear oxygen sensor 26 (shown by way of example in Fig. 5), obtains a current value of lambda $\lambda$.

This current value of lambda is supplied to a summing input 29a of a summing node 29 which also receives, at a subtracting input 29b, the objective lambda $\lambda^0$. A lambda error $\lambda_E$, supplied as output from the summing node 8 and equal to the difference between the current lambda value and the objective lambda $\lambda^0$ is supplied to a controller 30, for instance a proportional-integral controller of PI type which generates as output the control parameter $KO_2$.

The calculation block 11, receiving the control parameter $KO_2$ from the controller 30 and the stored stoichiometric ratio $(A/F)_{MEM}$ supplied by the memory 12, calculates and supplies to the engine 2 the quantity of fuel $Q_F$ that has to be injected into each cylinder.

The control parameter $KO_2$ is also supplied as input to the filter 13 which generates the filtered control parameter $KO_{2F}$ and supplies it to an estimation block 31. As described in detail below, the estimation block 30, which also receives as input the enabling signal EN from an enabling block 16, estimates the real stoichiometric ratio $(A/F)_F$, which is stored in the memory 12. Moreover, the estimation block is connected to the subtracting input 29b of the summing node 29 to which it supplies desired objective lambda values $\lambda^0$.

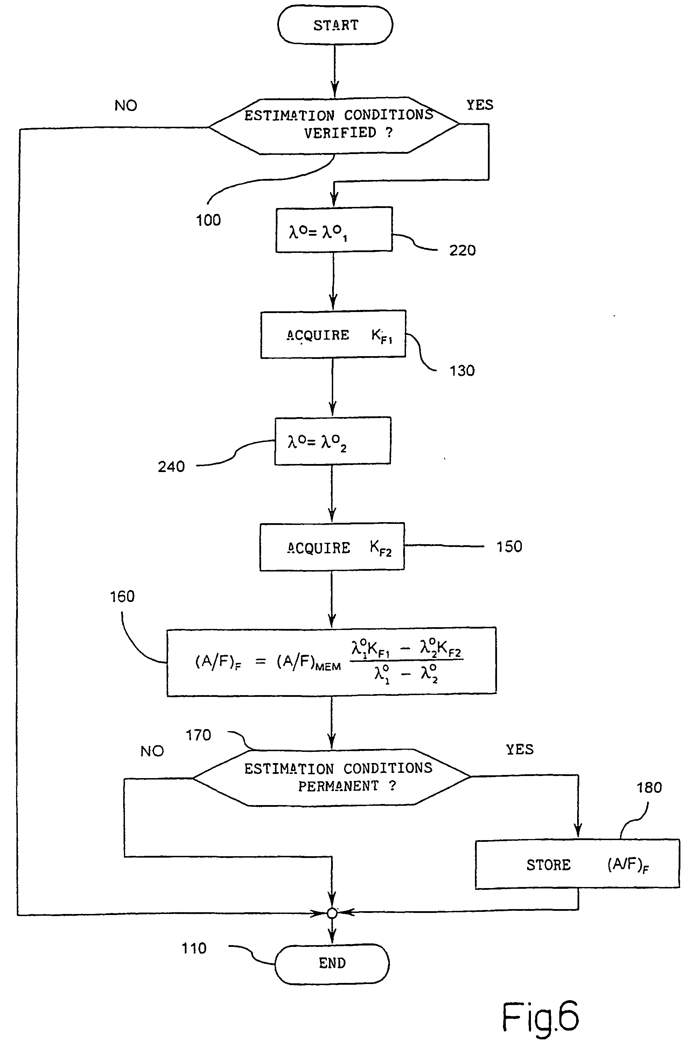

The control system 25 carries out the procedure to estimate the real stoichiometric ratio $(A/F)_F$ as shown in Fig. 6.

In particular, after checking that the conditions for estimating the stoichiometric ratio have occurred (block 100), similarly to the procedure illustrated in Fig. 3, the estimation block 31 imposes the first objective lambda value $\lambda^0_1$ of the objective lambda $\lambda^0$ (block 220) and the first filtered value $K_{F1}$ is acquired (block 130).

Subsequently, the objective lambda $\lambda^0$ is set to the second objective lambda value $\lambda^0_2$ (block 240) and the second filtered value $K_{F2}$ is then acquired (block 150).

Thereafter, the real stoichiometric ratio $(A/F)_F$ is calculated according to equation (3) (block 160) and it is checked whether the estimation conditions have been maintained during the performance of the estimation procedure (block 170); if so (output YES from block 160), the real stoichiometric ratio $(A/F)_F$ is stored in the memory 12 as the new stored stoichiometric ratio $(A/F)_{MEM}$ (block 180) and, if not, the procedure is directly terminated (block 110).

Given that, in the control system 25, the lambda error $\lambda_E$ resulting from the comparison made at the summing node 29 between the current lambda value and the objective lambda $\lambda^0$ is supplied to the controller 30, the procedure according to the variant makes it possible to impose the first and second objective lambda values $\lambda^0_1$ and $\lambda^0_2$ without having to use different reference voltage values $V_R$.

The advantages of the present method are clearly evident from the above description.

In the first place, the estimation of the real stoichiometric ratio $(A/F)_F$ of the fuel supplied to the engine, carried out according to the present method, does not require the use of an appropriate additional sensor. Consequently, the invention makes it possible to obtain major economic advantages. Moreover, given that the sensor used by known methods is subject to wear, its performance may gradually deteriorate and the measurements that it supplies may then be subject to errors. Eliminating the sensor therefore also makes it possible to obtain greater reliability over time.

A further advantage lies in the fact that the estimate of the real stoichiometric ratio $(A/F)_F$ is carried out on the basis of the trend of the control parameter $KO_2$, in particular the filtered control parameter $KO_{2F}$, at two different operating points. In this way it is possible to offset any drifts of the control parameter $KO_2$ due, for instance, to production dispersions or to the wear of certain components (injectors, oxygen sensors), and therefore to obtain estimates of a high degree of accuracy.

Further, the first and the second objective lambda values $\lambda^0{}_1$ and $\lambda^0{}_2$, defining the operating points used to carry out the estimation of the real stoichiometric ratio $(A/F)_F$, do not need to be selected such that they are symmetrical with respect to a unitary objective lambda value $\lambda^0$. Moreover, they could both be greater or lower than 1, since they are close enough for the conditions of number of revolutions and load of the engine not to change substantially during transition from one to the other.

**Claims**

1. A method for estimating the stoichiometric ratio of fuel for a control system of an internal combustion engine comprising oxygen sensor means (4, 26) and a control unit (5, 27), the oxygen sensor means (4, 26) being disposed along an exhaust duct (6) and supplying a composition signal $(V_\lambda)$ representative of a lambda value ($\lambda$) of exhaust gases present in the exhaust duct (6), the control unit (5, 27) comprising control means (10, 30) supplying a control parameter $(KO_2)$ as a function of an error magnitude $(V_E, \lambda_g)$ given by the difference between an actual magnitude $(V_\lambda, \lambda)$, correlated with the composition signal $(V_\lambda)$ and a reference magnitude $(V_R, \lambda^0)$, estimation means (15, 31) receiving a filtered control parameter $(KO_{2F})$ correlated with the control parameter $(KO_2)$, and supplying a real stoichiometric ratio $(A/F)_F$, the method comprising the stages of :

   a) detecting a trend of this filtered control parameter $(KO_{2F})$ (120-150, 220, 240),
   b) calculating the real stoichiometric ratio $(A/F)_F$ as a function of this trend (160);
       **characterised in that** the stage a) of detecting this trend comprises the stages of:

       a1) determining a first operating point (120, 220) of the engine (2),
       a2) acquiring a first filtered value $(K_{F1})$ of the filtered control parameter $(KO_{2F})$ (130), indicative of this first operating point,
       a3) determining a second operating point (140, 240) of the engine (2),
       a4) acquiring a second filtered value $(K_{F2})$ of this filtered control parameter $(KO_{2F})$ (150), indicative of this second operating point ; and **in that** the stage b) of calculating the real stoichiometric ratio $(A/F)_F$ as a function of the trend comprises the stage of:

       b1) calculating this real stoichiometric ratio $(A/F)_F$ as a function of the first and second filtered values $(K_{F1}, K_{F2})$ (160).

2. A method as claimed in claim 1, **characterised in that** the stage a1) of determining the first operating point comprises the stage of:

       a11) setting the reference magnitude $(V_R, \lambda^0)$ to a first reference value $(V_{R1}, \lambda^0{}_1)$ (120, 220).

3. A method as claimed in claim 1 or 2, **characterised in that** the stage a3) of determining the second operating point comprises the stage of:

       a31) setting the reference magnitude $(V_R, \lambda^0)$ to a second reference value $(V_{R2}, \lambda^0{}_2)$ (140, 240).

4. A method as claimed in claim 1, **characterised** that the stage b1) of calculating the real stoichiometric ratio $(A/F)_F$ as a function of the first and second filtered values $(K_{F1}, K_{F2})$ comprises the stage of:

       b11) calculating the real stoichiometric ratio $(A/F)_F$ according to the equation:

$$\left(A/F\right)_F = \left(A/F\right)_{MEM} \frac{\lambda_1^0 K_{F1} - \lambda_2^0 K_{F2}}{\lambda_1^0 - \lambda_2^0}$$

in which $(A/F)_{MEM}$ is a stored stoichiometric ratio and $\lambda_1^0$ and $\lambda_2^0$ are a first and respectively a second objective lambda values.

**5.** A method as claimed in any one of preceding claims, **characterised in that** the stage a) of detecting the trend is preceded by the stage of:

c) checking estimation conditions (100).

**6.** A method as claimed in claim 5, **characterised** that the stage c) of checking estimation conditions comprises the stages of:

c1) checking that a number of revolutions (RPM) and a load (L) of the engine (2) have remained substantially constant for a predetermined time interval,
c2) checking that a temperature $(T_S)$ of the oxygen sensor means (4, 26) is within a predetermined range of operational temperature values.

**7.** A method as claimed in claim 5 or 6, **characterised** that the stage b) of calculating the real stoichiometric ratio $(A/F)_F$ as a function of the trend is followed by the stage of:

d) storing this real stoichiometric ratio $(A/F)_F$ (180) if the estimation conditions are verified (170).

**Patentansprüche**

**1.** Ein Verfahren zum Abschätzen des stöchiometrischen Verhältnisses von Brennstoff für ein Steuersystem eines Verbrennungsmotors, welches ein Sensormittel (4,26) für Sauerstoff und eine Steuereinheit (5,27) umfasst, wobei das Sensormittel (4,26) für Sauerstoff entlang eines Abgaskanals (6) angeordnet ist und ein Zusammensetzungs-signal $(V_\lambda)$ zuführt, welches repräsentativ für einen Lambda-Wert $(\lambda)$ des Abgases, welches in dem Abgaskanal (6) vorhanden ist, ist, wobei die Steuereinheit (5, 27) ein Steuermittel (10, 30) umfasst, welches einen Steuerpa-rameter $(KO_2)$ als eine Funktion einer Fehlergröße $(V_E, \lambda_E)$ zuführt, die durch die Differenz zwischen einer aktuellen Größe $(V_\lambda, \lambda)$, die mit dem Zusammensetzungssignal $(V_\lambda)$ in Wechselbeziehung steht, und einer Referenzgröße $(V_R, \lambda^0)$ gegeben wird, ferner ein Abschätzungsmittel (15, 31), welches einen gefilterten Steuerparameter $(KO_{2F})$ empfängt, der in einer Wechselbeziehung mit dem Steuerparameter $(KO_2)$ steht, und ein reales stöchiometrische Verhältnis $(A/F)_F$ zuführt, wobei das Verfahren die folgenden Schritte umfasst:

a) das Detektieren eines Trends von diesem gefilterten Steuerparameter $(KO_{2F})$ (120 - 150, 220, 240),
b) das Berechnen des realen stöchiometrischen Verhältnisses $(A/F)_F$ als eine Funktion von diesem Trend (160);
**dadurch gekennzeichnet, dass** der Schritt a) des Detektierens dieses Trends die folgenden Schritte umfasst:

a1) das Bestimmen eines ersten Betriebspunktes (120, 220) des Motors (2),
a2) das Beschaffen eines ersten gefilterten Wertes $(K_{F1})$ des gefilterten Steuerparameters $(KO_{2F})$ (130), welcher indikativ für diesen ersten Betriebspunkt ist,
a3) das Bestimmen eines zweiten Betriebspunktes (140, 240) des Motors (2),
a4) das Beschaffen eines zweiten gefilterten Wertes $(K_{F2})$ von diesem gefilterten Steuerparameter $(KO_{2F})$ (150), welcher indiktativ für diesen zweiten Betriebspunkt ist;
und dadurch, dass der Schritt b) des Berechnens des realen stöchiometrischen Verhältnisses $(A/F)_F$ als eine Funktion des Trends den folgenden Schritt umfasst:
b1) das Berechnen von diesem realen stöchiometrischen Verhältnis $(A/F)_F$ als eine Funktion von den ersten und zweiten gefilterten Werten $(K_{F1}, K_{F2})$ (160).

**2.** Ein Verfahren, wie es in Anspruch 1 beansprucht wird, **dadurch gekennzeichnet, dass** der Schritt a1) des Bestimmens des ersten Betriebspunktes den folgenden Schritt umfasst:

a11) das Setzen der Referenzgröße ($V_R$, $\lambda^0$) auf einen ersten Referenzwert ($V_{R1}$, $\lambda^0_1$) (120, 220).

**3.** Ein Verfahren, wie es in Anspruch 1 oder 2 beansprucht wird, **dadurch gekennzeichnet, dass** der Schritt a3) des Bestimmens des zweiten Betriebspunktes den folgenden Schritt umfasst:

a31) das Setzen der Referenzgröße ($V_R$, $\lambda^0$) auf einen zweiten Referenzwert ($V_{R2}$, $\lambda^0_2$) (140,240).

**4.** Ein Verfahren, wie es in Anspruch 1 beansprucht wird, **dadurch gekennzeichnet, dass** der Schritt b1) des Berechnens des realen stöchiometrischen Verhältnisses (A/F)$_F$ als eine Funktion der ersten und zweiten gefilterten Werte ($K_{F1}$, $K_{F2}$) den folgenden Schritt umfasst:

b11) das Berechnen des realen stöchiometrischen Verhältnisses (A/F)$_F$ gemäß der folgenden Gleichung:

$$\left(A/F\right)_F = \left(A/F\right)_{MEM} \frac{\lambda^0_1 K_{F1} - \lambda^0_2 K_{F2}}{\lambda^0_1 - \lambda^0_2},$$

in welcher (A/F)$_{MEM}$ ein gespeichertes stöchiometrisches Verhältnis ist, und $\lambda^0_1$ und $\lambda^0_2$ jeweils ein erster und ein zweiter objektiver Lambda-Wert sind.

**5.** Ein Verfahren, wie es in einem der vorhergehenden Ansprüche beansprucht wird, **dadurch gekennzeichnet, dass** dem Schritt a) des Detektierens des Trends der folgende Schritt vorausgeht:

c) das Prüfen von Abschätzungszuständen (100).

**6.** Ein Verfahren, wie es in Anspruch 5 beansprucht wird, **dadurch gekennzeichnet, dass** der Schritt c) des Prüfens von Abschätzungszuständen die folgenden Schritte umfasst:

c1) das Überprüfen, dass eine Anzahl von Umdrehungen (RPM) und eine Last (L) des Motors (2) über einem vorbestimmten Zeitintervall im wesentlichen konstant gehalten worden sind.
c2) das Prüfen, dass eine Temperatur ($T_S$) des Sensormittels (4, 26) für Sauerstoff sich innerhalb eines vorbestimmten Bereiches von Betriebstemperaturwerten befindet.

**7.** Ein Verfahren, wie es in Anspruch 5 oder 6 beansprucht wird, **dadurch gekennzeichnet, dass** dem Schritt b) des Berechnens des realen stöchiometrischen Verhältnisses (A/F)$_F$ als eine Funktion des Trends der folgende Schritt folgt:

d) das Speichern von diesem realen stöchiometrischen Verhältnis (A/F)$_F$ (180), wenn die Abschätzungszustände verifiziert werden (170).

**Revendications**

**1.** Procédé pour estimer le rapport stoechiométrique de carburant pour un système de commande d'un moteur à combustion interne comportant des moyens de capteur d'oxygène (4, 26) et une unité de commande (5, 27), les moyens de capteur d'oxygène (4, 26) étant disposés le long d'un conduit d'échappement (6) et délivrant un signal de composition ($V_\lambda$) représentatif d'une valeur lambda ($\lambda$) de gaz d'échappement présents dans le conduit d'échappement (6), l'unité de commande (5, 27) comportant des moyens de commande (10, 30) fournissant un paramètre de commande ($KO_2$) en fonction d'une grandeur d'erreur ($V_E$, $\lambda_E$) donnée par la différence entre une grandeur réelle ($V_\lambda$, $\lambda$), corrélée avec le signal de composition ($V_\lambda$) et une grandeur de référence ($V_R$, $\lambda^0$), des moyens d'estimation (15, 31) recevant un paramètre de commande filtré ($KO_{2F}$) corrélé avec le paramètre de commande ($KO_2$), et fournissant un rapport stoechiométrique réel (A/F)$_F$, le procédé comportant les étapes consistant à :

a) détecter une tendance de ce paramètre de commande filtré ($KO_{2F}$) (120-150, 220, 240),
b) calculer le rapport stoechiométrique réel (A/F)$_F$ en fonction de cette tendance (160) ;
   **caractérisé en ce que** l'étape a) de détection de cette tendance comporte les étapes consistant à :

a1) déterminer un premier point de fonctionnement (120, 220) du moteur (2),

a2) acquérir une première valeur filtrée ($K_{F1}$) du paramètre de commande filtré ($KO_{2F}$) (130), indicative de ce premier point de fonctionnement,

a3) déterminer un second point de fonctionnement (140, 240) du moteur (2),

a4) acquérir une seconde valeur filtrée ($K_{F2}$) de ce paramètre de commande filtré ($KO_{2F}$) (150), indicative de ce second point de fonctionnement ; et

**en ce que** l'étape b) de calcul du rapport stoechiométrique réel $(A/F)_F$ en fonction de la tendance comporte l'étape consistant à :

b1) calculer ce rapport stoechiométrique réel $(A/F)_F$ en fonction des première et seconde valeurs filtrées ($K_{F1}$, $K_{F2}$) (160).

2. Procédé selon la revendication 1, **caractérisé en ce que** l'étape a1) de détermination du premier point de fonctionnement comporte l'étape consistant à :

a11) fixer la grandeur de référence ($V_R$, $\lambda^0$) à une première valeur de référence ($V_{R1}$, $\lambda^0_1$) (120, 220).

3. Procédé selon la revendication 1 ou 2, **caractérisé en ce que** l'étape a3) de détermination du second point de fonctionnement comporte l'étape consistant à :

a31) fixer la grandeur de référence ($V_R$, $\lambda^0$) à une seconde valeur de référence ($V_{R2}$, $\lambda^0_2$) (140, 240).

4. Procédé selon la revendication 1, **caractérisé en ce que** l'étape b1) de calcul du rapport stoechiométrique réel $(A/F)_F$ en fonction des première et seconde valeurs filtrées ($K_{F1}$, $K_{F2}$) comporte l'étape consistant à :

b11) calculer le rapport stoechiométrique réel $(A/F)_F$ selon l'équation :

$$(A/F)_F = (A/F)_{MEM} \frac{\lambda^0_1 K_{F1} - \lambda^0_2 K_{F2}}{\lambda^0_1 - \lambda^0_2}$$

dans laquelle $(A/F)_{MEM}$ est un rapport stoechiométrique enregistré et $\lambda^0_1$ et $\lambda^0_2$ sont une première et respectivement une seconde valeurs lambda cibles.

5. Procédé selon l'une quelconque des revendications précédentes, **caractérisé en ce que** l'étape a) de détection de la tendance est précédée de l'étape consistant à :

c) vérifier des conditions d'estimation (100).

6. Procédé selon la revendication 5, **caractérisé en ce que** l'étape c) de vérification de conditions d'estimation comporte les étapes consistant à :

c1) vérifier qu'un nombre de tours (RPM) et une charge (L) du moteur (2) sont restés sensiblement constants pendant un intervalle de temps prédéterminé,

c2) vérifier qu'une température ($T_S$) des moyens de capteur d'oxygène (4, 26) se situe dans les limites d'une plage prédéterminée de valeurs de température de fonctionnement.

7. Procédé selon la revendication 5 ou 6, **caractérisé en ce que** l'étape b) de calcul du rapport stoechiométrique réel $(A/F)_F$ en fonction de la tendance est suivie de l'étape consistant à :

d) enregistrer ce rapport stoechiométrique réel $(A/F)_F$ (180) si les conditions d'estimation sont vérifiées (170).

Fig.1

Fig.2

START

ESTIMATION CONDITIONS
VERIFIED ?

NO                                                    YES

100

$V_R = V_{R1}$                    120

ACQUIRE    $K_{F1}$             130

140              $V_R = V_{R2}$

ACQUIRE    $K_{F2}$             150

160

$$(A/F)_F = (A/F)_{MEM} \frac{\lambda_1^0 K_{F1} - \lambda_2^0 K_{F2}}{\lambda_1^0 - \lambda_2^0}$$

170

NO                                                    YES

ESTIMATION CONDITIONS
PERMANENT ?

180

STORE      $(A/F)_F$

110

END

Fig.3

Fig.4

Fig.5

START

100 ESTIMATION CONDITIONS VERIFIED ?
NO                                    YES

220 $\lambda^{o} = \lambda^{o}_{1}$

130 ACQUIRE $K_{F1}$

240 $\lambda^{o} = \lambda^{o}_{2}$

150 ACQUIRE $K_{F2}$

160 $(A/F)_{F} = (A/F)_{MEM} \dfrac{\lambda^{o}_{1}K_{F1} - \lambda^{o}_{2}K_{F2}}{\lambda^{o}_{1} - \lambda^{o}_{2}}$

170 ESTIMATION CONDITIONS PERMANENT ?
NO                                    YES

180 STORE $(A/F)_{F}$

110 END

Fig.6

13